(19) **Europäisches Patentamt / European Patent Office / Office européen des brevets**

(11) **EP 1 853 453 B1**

(12) **EUROPÄISCHE PATENTSCHRIFT**

(45) Veröffentlichungstag und Bekanntmachung des Hinweises auf die Patenterteilung:
**14.01.2009 Patentblatt 2009/03**

(21) Anmeldenummer: **06708101.8**

(22) Anmeldetag: **08.02.2006**

(51) Int Cl.:
**B60K 31/00** *(2006.01)* **G01S 13/93** *(2006.01)*
**B62D 1/28** *(2006.01)* **B62D 15/02** *(2006.01)*

(86) Internationale Anmeldenummer:
**PCT/EP2006/050754**

(87) Internationale Veröffentlichungsnummer:
**WO 2006/087281 (24.08.2006 Gazette 2006/34)**

(54) **VERFAHREN ZUR OBJEKTPLAUSIBILISIERUNG IN FAHRERASSISTENZSYSTEMEN**

METHOD FOR DETERMINING THE PLAUSIBILITY OF OBJECTS IN A VEHICLE DRIVER ASSISTANCE SYSTEM

PROCEDE POUR DETERMINER LA PLAUSIBILITE D'OBJETS DANS DES SYSTEMES D'ASSISTANCE A LA CONDUITE

(84) Benannte Vertragsstaaten:
**DE ES FR GB**

(30) Priorität: **21.02.2005 DE 102005007802**

(43) Veröffentlichungstag der Anmeldung:
**14.11.2007 Patentblatt 2007/46**

(73) Patentinhaber: **ROBERT BOSCH GMBH**
**70442 Stuttgart (DE)**

(72) Erfinder:
• **URBAN, Werner**
**71665 Vaihingen/Enz (DE)**
• **HENN, Ruediger-Walter**
**71263 Weil Der Stadt (DE)**
• **MOSER, Viktor**
**75181 Pforzheim (DE)**

(56) Entgegenhaltungen:
DE-A1- 10 018 556    DE-A1- 10 118 265
DE-A1- 10 254 394

**Beschreibung**

Stand der Technik

Die Erfindung betrifft ein Verfahren zur Objektplausibilisierung in Fahrerassistenzsystemen von Kraftfahrzeugen, die ein Ortungssystem, z. B. einem Radarsystem, zur Ortung von Objekten im Umfeld des Fahrzeugs und zur Messung von Querablagen dieser Objekte in der Richtung senkrecht zur Fahrtrichtung aufweisen, bei dem ein Fahrschlauch für das eigene Fahrzeug definiert wird und bewegliche Objekte danach plausibiliert werden, ob sie sich innerhalb oder außerhalb des Fahrschlauches befinden. DE 101 18 265 beschreibt ein solches system gemäß dem Oberbegriff des Anspruchs 1.

Bei Fahrerassistenzsystemen, die den Fahrer bei der Führung eines Kraftfahrzeugs unterstützen, ist es häufig erforderlich, geortete Objekte, insbesondere vorausfahrende andere Fahrzeuge, zu plausibilisieren. Damit ist gemeint, dass entschieden werden muss, ob diese Objekte bei der Ausführung der betreffenden Assistenzfunktion potentiell berücksichtigt werden müssen oder nicht. Beispiele für Fahrerassistenzsysteme, in denen dieses Problem auftritt, sind etwa adaptive Fahrgeschwindigkeitsregler, auch als ACC-Systeme bezeichnet (Adaptive Cruise Control), bei denen die Fahrgeschwindigkeit des eigenen Fahrzeugs so angepasst wird, dass ein geortetes vorausfahrendes Fahrzeugs in einem angemessenen Abstand verfolgt wird, oder Warn- und Sicherheitssysteme, die den Fahrer vor einer drohenden Kollision warnen sollen und/oder automatisch Maßnahmen zur Milderung der Kollisionsfolgen einleiten sollen.

Zur Objektplausibilisierung wird in solchen Systemen ein Fahrschlauch geeigneter Breite definiert, der den voraussichtlichen Kurs des eigenen Fahrzeugs beschreibt, und Objekte, die sich innerhalb dieses Fahrschlauches befinden, werden bei einem ACC-System in dem Sinne plausibiliert, dass sie als potentiell relevante Hindernisse eingestuft werden, auf die der Fahrgeschwindigkeitsregler möglicherweise reagieren muss. Unter den so plausibilsierten Objekten wird dann eines, typischerweise dasjenige mit dem geringsten Abstand zum eigenen Fahrzeug, als Zielobjekt für die Abstandsregelung ausgewählt.

Die Breite des Fahrschlauches sollte generell etwa der Breite der von dem eigenen Fahrzeug befahrenen Fahrspur entsprechen. Bei der genauen Festlegung dieser Breite tritt jedoch der folgende Zielkonflikt auf. Einerseits sollte die Breite möglichst groß gewählt werden, damit potentielle Zielobjekte frühzeitig erkannt werden können, insbesondere auch bei nicht geradem Fahrbahnverlauf, und somit eine rechtzeitige Anpassung der Geschwindigkeit vorgenommen werden kann. Wenn andererseits der Fahrschlauch so breit ist, dass er sich auch auf Teile von Nachbarspuren erstreckt, besteht die Gefahr, dass so genannte Nebenspurstörungen auftreten, d.h., dass Objekte, die sich auf der Nebenspur befinden und daher eigentlich nicht relevant sind, fälschlich plausibiliert und in die Auswertung mit einbezogen werden, so dass es zu Fehlreaktionen des Systems kommt.

Zur Optimierung der Fahrschlauchbreite ist bereits vorgeschlagen worden, den Fahrschlauch über eine bestimmte Grundbreite hinaus zu verbreitern, sobald ein Zielobjekt erkannt wurde, so dass dieses Zielobjekt dann stabiler verfolgt werden kann. Dies hat jedoch den Nachteil, dass das verfolgte Vorderfahrzeug auch dann, wenn dieses Fahrzeug auf eine Nebenspur ausschert, unnötig lange als Zielobjekt festgehalten wird, und das auftretende Nebenspurstörungen sich länger und damit wesentlich intensiver auswirken.

Ein anderer Ansatz besteht darin, anhand von Daten, die von einem Navigationssystem bereitgestellt werden, oder anhand von Ortungsdaten, die vom Ortungssystem geliefert werden, zwischen verschiedenen Straßentypen zu unterscheiden, nämlich Autobahnen einerseits und Landstraßen andererseits. Auf Autobahnen, die generell mehrere Fahrspuren je Fahrtrichtung aufweisen, wird dann ein schmalerer Fahrschlauch gewählt, um Nebenspurstörungen zu vermeiden, während auf Landstraßen, die generell nur eine Fahrspur in jeder Richtung haben, ein breiterer Fahrschlauch gewählt wird, damit eine frühzeitigere Erfassung und stabilere Verfolgung des Zielobjekts ermöglicht wird. Hier besteht jedoch der Nachteil, dass auf Autobahnen das Zielobjekt erst relativ spät erkannt werden kann und somit das Annäherungsverhalten des eigenen Fahrzeugs beeinträchtigt wird. Andererseits besteht auf Landstraßen, insbesondere auf gut ausgebauten, sehr breiten Landstraßen sowie im Fall von auch auf Landstraßen gelegentlich vorhandenen Kriechspuren, Einfädelungsspuren oder Abbiegespuren eine hohe Anfälligkeit für Nebenspurstörungen.

Vorteile der Erfindung

Die Erfindung mit den in Anspruch 1 angegebenen Merkmalen ermöglicht es, unabhängig von oder ergänzend zu Zusatzinformationen, wie sie etwa von einem Navigationssystem geliefert werden, die Breite und Lage des Fahrschlauches in Abhängigkeit von der aktuellen Situation zu optimieren.

Zu diesem Zweck werden bei dem erfindungsgemäßen Verfahren die folgenden Schritte ausgeführt:

- statistische Auswertung der Querablagen von ruhenden Objekten, zur Erkennung linker und rechter Fahrbahngrenzen,
- Auswertung der Querablagen von beweglichen Objekten, zur Erkennung etwaiger Nebenspuren,

- berechnen eines Wahrscheinlichkeitswertes Q_R dafür, dass, sich das eigene Fahrzeug auf der äußersten rechten Fahrspur der Fahrbahn befindet, und eines Wahrscheinlichkeitswertes Q_L dafür, dass sich das eigene Fahrzeug auf der äußersten linken Fahrspur befindet, und

- variieren der Breite und/oder Querposition des Fahrschlauches in Abhängigkeit von den Wahrscheinlichkeitswerten Q_R und Q_L.

Radarsysteme, die in Fahrerassistenzsystemen typischerweise als Ortungssystem eingesetzt werden, ermöglichen nicht nur eine Messung des Abstands und der Relativgeschwindigkeit der georteten Objekte, sondern aufgrund eines gewissen Winkelauflösungsvermögens des Radarsensors auch eine Messung des Azimutwinkels des Objektes. Aus diesem Azimutwinkel lässt sich in Verbindung mit dem gemessenen Objektabstand die Querablage des Objekts, also die Position in der Richtung senkrecht zur Fahrtrichtung des eigenen Fahrzeugs messen. Ein Vergleich der gemessenen Relativgeschwindigkeit mit der bekannten Fahrgeschwindigkeit des eigenen Fahrzeugs ermöglicht darüber hinaus eine Unterscheidung zwischen ruhenden und beweglichen Objekten. Im Fall eines Ortungssystems, bei dem die Relativgeschwindigkeit nicht direkt gemessen werden kann, erhält man die Relativgeschwindigkeit durch zeitliche Ableitung der Abstandsdaten. Bei den Objekten, die als ruhende Objekte erkannt werden, wird es sich generell um Objekte am Fahrbahnrand oder in der Nähe des Fahrbahnrandes handeln, beispielsweise um Leitplankenpfosten und dergleichen. Durch statistische Auswertung der Querablagen dieser Objekte lässt sich daher ein wahrscheinlicher Wert für die Lage der linken und rechten Fahrbahnränder in Bezug auf das eigenen Fahrzeug abschätzen. Auf diese Weise erhält man nicht nur Informationen über die Fahrbahnbreite, sondern auch eine Information darüber, ob sich das eigenen Fahrzeug näher am rechten oder näher am linken Fahrbahnrad befindet.

Entsprechend ermöglicht eine Auswertung der Querablagen von beweglichen Objekten, insbesondere von vorausfahrenden und entgegenkommenden Fahrzeugen, eine Bestimmung der Anzahl der Fahrspuren je Fahrtrichtung sowie eine Erkennung der Position des eigenen Fahrzeugs in Bezug auf diese Fahrspuren.

Wenn diese Auswertungsergebnisse miteinander kombiniert werden, lässt sich zumindest eine gewisse Wahrscheinlichkeit Q_R bzw. Q_L dafür angeben, dass sich das eigene Fahrzeug auf der äußersten rechten bzw. auf der äußerst linken Fahrspur befindet. Dabei ist es möglich, dass Q_R und Q_R gleichzeitig hohe Werte annehmen, was bedeutet, dass es sich um eine einspurige Fahrbahn handelt.

Implizit enthalten diese Wahrscheinlichkeitswerte somit eine Information über das etwaige Vorhandensein von Nebenspuren, und auf dieser Grundlage ist es möglich, die Breite des Fahrschlauches situationsabhängig zu optimieren, so dass immer dann, wenn keine Nebenspuren vorhanden sind und somit auch keine Nebenspurstörungen zu befürchten sind, eine frühzeitige Erkennung und Plausibilisierung von Objekten ermöglicht wird, während bei Vorhandensein von Nebenspuren der Fahrschlauch eingeengt wird, so dass Nebenspurstörungen vermieden werden. Da bei diesem Verfahren nur auf die tatsächlichen und aktuellen Gegebenenheiten und nicht auf einen bestimmten Straßentyp abgestellt wird, lassen sich die Vorteile eines breiten Fahrschlauches, also ein verbessertes Annäherungsverhalten des eigenen Fahrzeugs, beispielsweise auch bei einspuriger Verkehrsführung an Autobahnbaustellen erreichen, während andererseits, sofern auf Landstraßen eine Überholspur oder dergleichen vorhanden ist, der Gefahr von Nebenspurstörungen durch eine rechtzeitige Anpassung des Fahrschlauches vorgebeugt werden kann.

Vorteilhafte Ausgestaltungen und Weiterbildungen der Erfindung ergeben sich aus den Unteransprüchen.

Das vorgeschlagene Verfahren, das maßgeblich auf einer relativ detaillierten Spurerkennung allein anhand der Ortungsdaten des Ortungsgerätes beruht, lässt sich in Fahrerassistenzsystemen auch für andere Zwecke nutzen, beispielsweise zur Erkennung von Spurwechselvorgängen des eigenen Fahrzeugs, zur Erkennung von Umfahrungsmöglichkeiten im Rahmen eines Warn- oder Sicherheitssystems und dergleichen.

In einer bevorzugten Ausführungsform wird das Verfahren zu einer asymmetrischen Fahrschlauchanpassung genutzt, etwa in der Weise, dass, wenn eine hohe Wahrscheinlichkeit dafür spricht, dass sich das eigene Fahrzeug auf der äußersten rechten Fahrspur befindet, der Fahrschlauch asymmetrisch nur auf der rechten Seite erweitert wird, so dass eine frühzeitigere und stabilere Zielortung auch bei gekrümmtem Fahrbahnverlauf ermöglicht wird, während durch die Beibehaltung einer engeren Fahrschlauchgrenze auf der der Nebenspur zugewandten Seite die Gefahr von Nebenspurstörungen vermieden wird.

Zur Berechnung von Wahrscheinlichkeitswerten dafür, dass das Fahrzeug am rechten oder linken Fahrbahnrand fährt, werden die gemessenen Fahrbahnrandabstände (in der Richtung quer zur Fahrtrichtung) vorzugsweise mit einem vorgegebenen Straßenrandprofil verglichen, das auf einer realistischen Annahme für die Breite einer Fahrspur beruht. Die statistische Streuung der gemessenen Querablagen der ruhenden Objekte kann dabei als Qualitätsparameter für die Erkennung des Straßenrandes in die Auswertung einfließen.

Analog werden vorzugsweise auch die gemessenen Querablagen der beweglichen Objekte mit einem vorgegebenen Fahrspurprofil verglichen, um Wahrscheinlichkeitswerte für das Vorhandensein einer Nebenspur zu erhalten. Zweckmäßig ist weiterhin die Unterscheidung zwischen beweglichen Objekten, die sich absolut in der gleichen Richtung wie das eigene Fahrzeug bewegen, und solchen, die sich in Gegenrichtung bewegen. Auf diese Weise lassen sich Parallelspuren, die zur gleichen Richtungsfahrbahn gehören, von Gegenspuren für die entgegengesetzte Fahrtrichtung unterscheiden. In Ländern mit Rechtsverkehr mag es genügen, eine Prüfung auf das Vorhandensein von Gegenspuren nur für linke Fahrbahnseite durchzuführen. Im Hinblick auf eine größere Robustheit des Verfahrens und im Hinblick auf den Einsatz auch in Ländern mit Linksverkehr ist es jedoch zweckmäßig, das Verfahren für die rechte und linke Fahrbahnseite gleichermaßen auszuführen.

Die statistische Auswertung der Ortungsdaten schließt vorzugsweise eine Tiefpassfilterung ein, mit der einerseits eine hinreichende Stabilität der Wahrscheinlichkeitswerte und andererseits eine hinreichend schnelle Anpassung an eine geänderte Situation erreicht wird. Dabei ist es zweckmäßig, zunächst gesonderte Wahrscheinlichkeitswerte für die folgenden Situationen zu berechnen: "unmittelbar rechts (links) neben dem eigenen Fahrzeug befindet sich ein Fahrbahnrand", "unmittelbar rechts (links) neben dem eigenen Fahrzeug befindet sich eine Nebenspur", wobei im Fall der Nebenspuren noch zwischen Parallel- und Gegenspuren unterschieden werden kann. Vorzugsweise werden dann nach geeigneter Filterung aus diesen Einzel-Wahrscheinlichkeitswerten die Wahrscheinlichkeitswerte $Q\_R$ und $Q\_L$ dafür berechnet, dass sich das eigene Fahrzeug auf der äußersten rechten bzw. auf der äußersten linken Spur befindet.

Das Ausmaß der Aufweitung der linken bzw. rechten Hälfte des Fahrschlauches kann von der Höhe des betreffenden Wahrscheinlichkeitswertes abhängen, so dass der Fahrschlauch beispielsweise auf der rechten Seite um so stärker aufgeweitet wird, je größer der Wahrscheinlichkeitswert $Q\_R$ ist. In einer vorteilhaften Ausführungsform ist das Ausmaß der Aufweitung jedoch durch die Hüllkurve des betreffenden Wahrscheinlichkeitswertes bestimmt, d.h., der Fahrschlauch wird in dem Maße aufgeweitet, wie der Wahrscheinlichkeitswert zunimmt, bleibt jedoch zumindest vorübergehend in dem aufgeweiteten Zustand "eingefroren", wenn der Wahrscheinlichkeitswert wieder abnimmt. Die Rückkehr zu einem nicht oder weniger stark aufgeweiteten Fahrschlauch erfolgt dann für die betreffende Fahrzeugseite jeweils in einer Reset-Prozedur, die nur dann ausgeführt wird, wenn eine gewisse Wahrscheinlichkeit für das Vorhandensein einer Nebenspur auf der betreffenden Seite spricht und außerdem auf dieser Nebenspur ein Fahrzeug geortet wird, das eine Nebenspurstörung verursachen könnte, das also langsamer ist als das eigene Fahrzeug und sich in der gleichen Richtung bewegt. Auf diese Weise wird erreicht, dass die im Hinblick auf die Erfassung des Umfelds eigentlich unerwünschte Verengung des Fahrschlauches nur dann stattfindet, wenn ernsthaft mit dem Auftreten von Nebenspurstörungen zu rechnen ist.

Zeichnung

Ein Ausführungsbeispiel der Erfindung ist in den Zeichnungen dargestellt und in der nachfolgenden Beschreibung näher erläutert.

Es zeigen:

Figur 1 ein Blockdiagramm eines Fahrerassistenzsystems;

Figur 2 eine Häufigkeitsverteilung ruhender Objekte in Querrichtung der Fahrbahn;

Figur 3 ein Diagramm eines Fahrbahnrandprofils;

Figur 4 ein Diagramm eines Fahrspurprofils;

Figur 5 ein Flussdiagramm einer Prozedur zur Bestimmung einer Fahrschlauchaufweitung;

Figur 6 ein Zeitdiagramm zur Erläuterung der in Figur 5 gezeigten Prozedur; und

Figuren 7 bis 10 Beispiele für unterschiedliche Fahrschlauchaufweitungen in unterschiedlichen Situationen.

Beschreibung des Ausführungsbeispiels

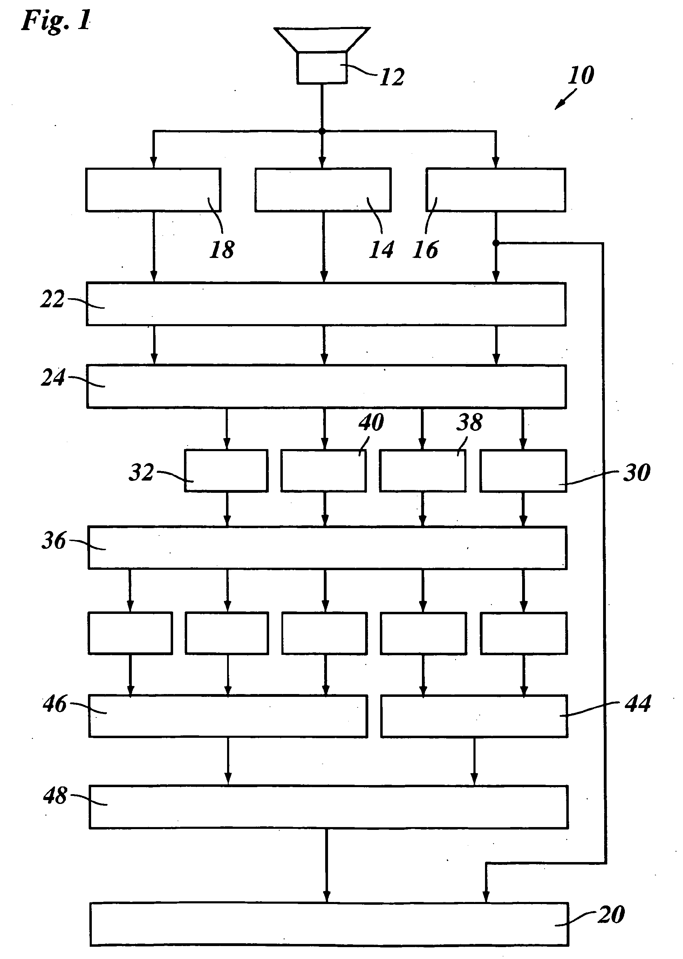

In Figur 1 ist als Beispiel für ein Fahrerassistenzsystem ein ACC-System 10 gezeigt, das Ortungsdaten eines vorn im Fahrzeug eingebauten Radarsensors 12 auswertet. Die Ortungsdaten umfassen die Abstände, Relativgeschwindigkeiten und Azimutwinkel der georteten Objekte. Durch Vergleich der Relativgeschwindigkeiten mit der Fahrgeschwindigkeit des eigenen Fahrzeugs werden zunächst die Absolutgeschwindigkeiten der georteten Objekte berechnet, und diese Objekte werden in drei Kategorien eingeteilt: Standziele 14, gleichsinnig bewegte Ziele 16, also Objekte, die sich in der gleichen Richtung wie das eigene Fahrzeug bewegen, insbesondere vorausfahrende Fahrzeuge, und gegensinnig bewegte Ziele 18, z.B. Fahrzeuge im Gegenverkehr. Die Ortungsdaten der gleichsinnig bewegten Ziele 16 werden an einen ACC-Regler 20 weitergeleitet, der die eigentliche Abstandsregelung vornimmt.

Die nachstehend beschriebenen Funktionsblöcke in Figur 1 dienen zur Bestimmung und situationsabhängigen Anpassung des Fahrschlauches, d.h., derjenigen Zone der Fahrbahn, die voraussichtlich von dem eigenen Fahrzeug überstrichen werden wird.

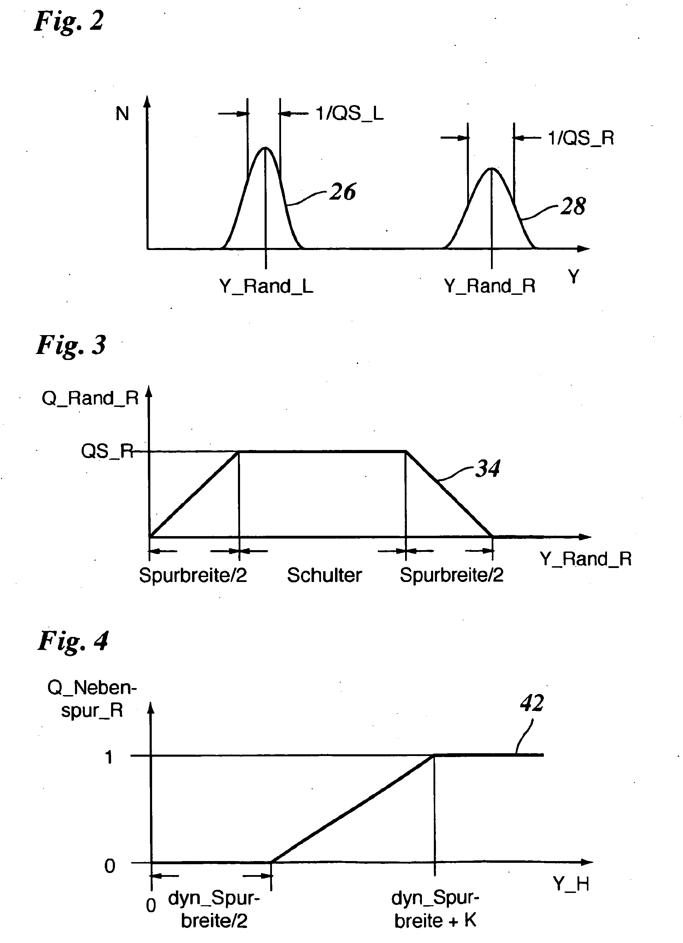

Anhand der Abstände und Azimutwinkel werden in Block 22 zunächst die Querablagen Y der georteten Objekte berechnet, also die Abstände der georteten Objekte von der Mitte des eigenen Fahrzeugs in der Richtung quer zur Fahrtrichtung. Genauer handelt es sich bei den Querablagen um die Abstände von der Mittellinie des zu bestimmenden Fahrschlauches. In Block 24 werden diese Querablagen dann gesondert für jede der drei Objektkategorien ausgewertet. Für die Standziele 14 ist dies in Figur 2 illustriert.

In Figur 2 sind die Auftrittshäufigkeiten N der Objekte gegen die Querablage Y aufgetragen. Die Häufigkeitsverteilung bildet zwei Peaks 26, 28, entsprechend dem gehäuften Auftreten von Standzielen wie Leitplankenpfosten, Lärmschutzwällen und dergleichen am linken und rechten Fahrbahnrad. Bei der Berechnung der Querablagen Y ist eine ggf. vorhandene Fahrbahnkrümmung zu berücksichtigen. Diese lässt sich in bekannter Weise anhand der gemessenen Gierrate und der Fahrgeschwindigkeit des eigenen Fahrzeugs abschätzen. Gemäß einer Weiterbildung können auch die Ortungsdaten der Standziele 14 selbst zur Bestimmung der Fahrbahnkrümmung herangezogen werden. In diesem Fall werden die unkorrigierten Querablagen der Objekte für jeden der Peaks 26, 28 gegen den Abstand aufgetragen, und die Abstandsabhängigkeit wird durch eine Parabel oder ein Polynom höheren Grades approximiert, das dann die Fahrbahnkrümmung angibt.

Die in Figur 2 gezeigten Querablagen Y sind bereits um diese Fahrbahnkrümmung korrigiert. Die Scheitelwerte oder Schwerpunkte der beiden Peaks 26, 28 stellen Schätzwerte für den betreffenden Fahrbahnrandabstand Y_Rand_R bzw. Y_Rand_L dar. Die Halbwertsbreiten oder Standardabweichungen der einzelnen Peaks 26, 28, genauer, deren Kehrwerte, bilden zugleich ein Maß QS_R bzw. QS_L für die Güte oder Verlässlichkeit der Randerkennung. Diese Güteparameter werden so normiert, dass sie bei einem sehr scharf definierten Peak den Wert 1 haben.

In Blöcken 30 und 32 in Figur 1 werden aus diesen statistischen Daten für die beiden Fahrbahnränder zwei Wahrscheinlichkeitswerte Q_Rand_R und Q_Rand_L berechnet, die die Wahrscheinlichkeit dafür angeben, dass sich der rechte bzw. linke Fahrbahnrand unmittelbar rechts bzw. unmittelbar links neben dem eigenen Fahrzeug befindet. Dazu werden die Randabstände Y_Rand_R und Y_Rand_L mit einem vorgegebenen Straßenrandprofil verglichen, wie für den rechten Straßenrand in Figur 3 dargestellt ist.

Die Kurve 34 in Figur 3 repräsentiert ein Straßenrandprofil, das auf der Annahme eines realistischen Wertes für die Breite "Spurbreite" einer Fahrspur beruht, sowie der Annahmen, dass die Standziele, die den rechten Fahrbahnrand markieren, sich innerhalb eines bestimmtes Abstandsbereiches "Schulter" neben dem Rand der Fahrspur befinden. Wenn der Randabstand Y_Rand_R innerhalb des Abstandsbereiches "Schulter" liegt, wird dem Wahrscheinlichkeitswert Q_Rand_R der Wert QS_R (ein Wert zwischen 0 und 1) zugewiesen, der die aus der Halbwertsbreite des Peaks abgeleitete Güte der statistischen Daten repräsentiert. In diesen Güteparameter kann ergänzend auch die Anzahl der Standziele einfließen, die zu dem betreffenden Peak beigetragen haben, da die Erkennung eines Straßenrandes um so verlässlicher ist, je mehr Objekte diesen Rand markieren.

Wenn der Randabstand Y_R gleich 0 ist, so würde dies bedeuten, dass sich die Mitte des eigenen Fahrzeugs unmittelbar über dem rechten Straßenrand befindet, eine offensichtlich unplausible Annahme. In diesem Fall wird deshalb der Wahrscheinlichkeitswert Q_Rand_R auf 0 gesetzt (linkes Ende der Kurve 34 in Figur 3). In einem zwischen dem Abstandswert 0 und dem Beginn der Schulter liegenden Bereich, dessen Breite der Hälfte einer typischen Fahrspur entspricht, wird linear interpoliert. Entsprechend schließt sich an den Bereich "Schulter" bei größeren Abständen ein Bereich von einer halben Spurbreite an, in dem der Wahrscheinlichkeitswert Q_Rand_R wieder linear auf 0 abfällt. Bei noch größeren Randabständen ist Q_Rand_R gleich 0, da in diesem Fall eher anzunehmen ist, dass sich zwischen dem eigenen Fahrzeug und dem rechten Fahrbahnrand noch eine weitere Fahrspur befindet.

Die in Figur 2 illustrierte statistische Auswertung wird entsprechend dem dynamischen Auftreten neuer Objekte fortlaufend aktualisiert, und die Bestimmung von Q_Rand_R gemäß Figur 3 wird periodisch, jeweils anhand der aktuellen Daten wiederholt.

Die Bestimmung des Wahrscheinlichkeitswertes Q_Rand_L in Block 32 in Figur 1 erfolgt auf analoge Weise.

In Block 36 in Figur 1 werden die nacheinander berechneten Werte von Q_Rand_R und Q_Rand_L einer asymmetrischen Tiefpassfilterung unterzogen, asymmetrisch in dem Sinne, dass die Inkrementierung bei zunehmenden Wahrscheinlichkeitswerten mit einer kleineren Zeitkonstanten erfolgt als die Dekrementierung bei abnehmenden Wahrscheinlichkeitswerten. Die Zeitkonstanten sind dabei so gewählt, dass die Zeitspanne, in der ein einmal erkannter Straßenrand "vergessen" wird, etwa der Dauer eines Spurwechselvorgangs entspricht, also beispielsweise etwa 3 s. Das Ergebnis dieser Filterprozedur sind gefilterte Wahrscheinlichkeitswerte Qf_Rand_R und Qf_Rand_L dafür, dass sich unmittelbar rechts neben dem eigenen Fahrzeug der rechte Straßenrand bzw. unmittelbar links neben dem eigenen Fahrzeug der linke Straßenrand befindet.

Auf ähnliche Weise werden in Blöcken 22 und 24 die "historischen" Querablagen von georteten Fahrzeugen dazu herangezogen, Nebenspurwahrscheinlichkeiten Q_Nebenspur_R und Q_ Nebenspur_L zu berechnen, die die Wahrscheinlichkeit dafür angeben, dass sich rechts bzw. links neben dem eigenen Fahrzeug noch eine Nebenspur befindet. Dabei ist zunächst noch keine Unterscheidung zwischen gleichsinnig bewegten Zielen 16 und gegensinnig bewegten Zielen 18 erforderlich, d.h., die Nebenspurwahrscheinlichkeit kann sich auch auf eine Spur der Gegenfahrbahn beziehen, die nicht durch einen Fahrbahnrand, durch Leitplanken oder dergleichen von der eigenen Spur getrennt ist, wie es z.B. bei Landstraßen und bei Autobahnbaustellen häufig der Fall ist.

Da die beweglichen Ziele bei geringer Verkehrsdichte nur relativ selten auftreten werden, ist eine statistische Auswertung im eigentlichen Sinne nur eingeschränkt möglich. Es ist deshalb zweckmäßig, jedes einzelne geortete Objekt gesondert zur Berechnung einer Nebenspurwahrscheinlichkeit heranzuziehen, indem die nur einmal gemessene oder über einen bestimmten Zeitraum aufgezeichnete und dann gemittelte Querablage Y des Objekts - wiederum nach Korrektur für die Fahrbahnkrümmung - mit einem vorgegebenen Fahrspurprofil verglichen wird (Blöcke 38 und 40 in Figur 1).

Für die Nebenspurwahrscheinlichkeit Q-Nebenspur_R ist dieser Prozess in Figur 4 illustriert.

Die Kurve 42 in Figur 4 repräsentiert ein vorgegebenes Fahrspurprofil und gibt die Nebenspurwahrscheinlichkeit Q_Nebenspur_R in Abhängigkeit von der historischen Querablage Y_ H eines einzelnen Objekts an. Wenn die Querablage kleiner ist als die Hälfte einer vorgegebenen dynamischen Spurbreite, so ist der Wahrscheinlichkeitswert 0, da dann anzunehmen ist, dass sich das Objekt auf der vom eigenen Fahrzeug befahrenen Spur befindet. Die in Figur 4 verwendete dynamische Spurbreite kann von der in Figur 3 für die Randerkennung verwendeten Spurbreite verschieden sein, um dem Umstand Rechnung zu tragen, dass am Fahrbahnrand häufig noch ein Standstreifen oder dergleichen vorhanden ist.

Wenn die Querablage Y_H größer ist als eine volle dynamische Spurbreite, vermehrt um einen Korrekturwert K, so ist die Nebenspurwahrscheinlichkeit gleich 1, da dann sicher anzunehmen ist, dass sich das Fahrzeug auf einer Nebenspur befindet. Zwischen den Werten dyn_Spurbreite/2 und dyn_Spurbreite + K wird linear interpoliert.

Der Korrekturwert K trägt dem Umstand Rechnung, dass der gemessene Wert für die Querablage bei größeren Objektabständen unsicherer wird, und ist deshalb vom jeweiligen Objektabstand abhängig. Zu dieser Unsicherheit trägt maßgeblich die begrenzte Genauigkeit bei der Bestimmung der Fahrbahnkrümmung bei. Diese Genauigkeit kann durch einen Gierratenfehler k beschrieben werden, und da die Querablage proportional zur Fahrbahnkrümmung und zum Quadrat des Abstands D ist, wählt man zweckmäßig: K = (1/2) *k*D2.

Die Bestimmung der Nebenspurwahrscheinlichkeit Q_Nebenspur_L in Block 40 erfolgt auf analoge Weise.

Es wäre denkbar, auch die Querablagen für bewegliche Objekte einer näheren statistischen Analyse (in einem größeren Zeitrahmen) zu unterziehen, um genauere Werte für die Lagen und Breiten der einzelnen Fahrspuren zu erhalten. Diese Information ließe sich zu einer dynamischen Anpassung der Größen "Spurbreite" und "dyn_Spurbreite" in Figuren 3 und 4 nutzen.

In Block 36 in Figur 1 werden die in den Blöcken 38 und 40 berechneten Nebenspurwahrscheinlichkeiten mit einer geeigneten Zeitkonstanten tau auf folgende Weise gefiltert:

$$Q_{i+1} = Q_i + (dt/tau)*(Q\_Nebenspur - Q_i)$$

Darin ist $Q_{i+1}$ der neue gefilterte Wert, $Q_i$ der vorherige gefilterte Wert, dt die Dauer eines Abtastzyklus und Q_Nebenspur entweder Q_Nebenspur_R oder Q_Nebenspur_L, je nachdem, ob es sich um ein Objekt rechts oder links neben dem eigenen Fahrzeug handelt. Die Zeitkonstante tau beträgt beispielsweise 3,0 s.

Diese Filterprozedur wird im gezeigten Beispiel parallel für drei verschiedene Objektkategorien ausgeführt. Dabei wird nicht nur unterschieden, ob sich das aktuell betrachtete Objekt links oder rechts befindet, sondern für Objekte auf der linken Seite auch, ob es sich um ein gleichsinnig bewegtes Ziel 16 oder ein gegensinnig bewegtes Ziel 18 handelt. Wenn im aktuellen Abtastzyklus mehrere Objekte derselben Kategorie geortet werden, so wird der Filterzyklus mehrmals durchlaufen, und die gefilterten Werte $Q_{i+1}$ werden entsprechend häufiger aktualisiert. Auf diese Weise fließt auch die Ereignishäufigkeit in die entsprechenden Wahrscheinlichkeitswerte ein.

Die Ergebnisse $Q_{i+1}$ sind die gefilterten Wahrscheinlichkeitswerte Qf_Parallelspur_R, Qf_Parallelspur_L und Qf_Gegenspur_L. Spuren mit Gegenverkehr rechts vom eigenen Fahrzeug sind in Ländern mit Rechtsverkehr im allgemeinen nicht zu erwarten, doch ist es zweckmäßig, auch diese Möglichkeit einzubeziehen und durch eine entsprechende Filterprozedur auch einen gefilterten Wahrscheinlichkeitswert Qf_Gegenspur_R zu berechnen, was jedoch in Figur 1 der Einfachheit halber nicht dargestellt ist.

Wenn in einem Abtastzyklus für eine Fahrbahnseite und Fahrtrichtung keine beweglichen Objekte geortet werden, ist die entsprechende Nebenspurwahrscheinlichkeit Qf_Nebenspur_R bzw. Qf. Nebenspur_L gleich 0, und die Filterprozedur führt zu einem Abklingen des gefilterten Wahrscheinlichkeitswertes mit einer . Zeitkonstanten von 3 s.

In Blöcken 44 und 46 in Figur 1 werden die gefilterten Wahrscheinlichkeitswerte für die verschiedenen Klassen von beweglichen Objekten und für die Fahrbahnränder logisch miteinander verknüpft, so dass man letztlich einen Wahrscheinlichkeitswert Q_R dafür erhält, dass sich das eigene Fahrzeug auf der äußersten rechten Fahrspur befindet, sowie einen Wahrscheinlichkeitswert Q_L dafür, dass sich das Fahrzeug auf der äußersten linken Fahrspur befindet. Im gezeigten Beispiel erfolgt die logische Verknüpfung für Q_R nach der Formel:

$$Q\_R = MAX(Qf\_Rand\_R - Qf\_Parallelspur\_R, 0)$$

Dieser Wahrscheinlichkeitswert ist hoch, wenn sich der rechte Fahrbahnrand auf der rechten Seite in der Nähe des eigenen Fahrzeugs befindet, und er ist niedrig, wenn sich mindestens eine Parallelspur rechts neben dem Fahrzeug befindet.

Für Q_L erfolgt die logische Verknüpfung nach der Formel

$$Q\_L = MAX(Qf\_Rand\_L + Qf\_Gegenspur\_L$$
$$-Qf\_Parallelspur\_L, 0)$$

In diesem Fall erhöht sich die Wahrscheinlichkeit auch dann, wenn Fahrzeuge auf einer Gegenspur geortet werden, was darauf hinweist, dass sich das eigene Fahrzeug am äußersten linken Rand der eigenen Richtungsfahrbahn befindet.

Wahlweise, sofern gegensinnig bewegte Ziele auch auf der rechten Fahrzeugseite ausgewertet werden, kann auch Q_R völlig analog zu Q_L gebildet werden.

Eine weitere denkbare Verfeinerung besteht darin, dass bei der Berechnung der Nebenspurwahrscheinlichkeiten in Blöcken 38 und 40 das in Figur 4 gezeigte Profil nur für gleichsinnig bewegte Ziele verwendet wird, während für gegensinnig bewegte Ziele ein anderes Profil verwendet wird, bei dem die Wahrscheinlichkeit bei größeren Querablagen wieder auf 0 abfällt. Dies würde dem Umstand Rechnung tragen, dass bei sehr weitem Ortungswinkelbereich des Radarsensors der Gegenverkehr auch dann geortet werden kann, wenn sich das eigene Fahrzeug näher am rechten Fahrbahnrand befindet.

In Block 48 in Figur 1 erfolgt dann anhand der Wahrscheinlichkeitswerte Q_R und Q_L eine asymmetrische Fahrschlauchanpassung. Es wird unterstellt, dass der Verlauf der Mittellinie des Fahrschlauches bereits in bekannter Weise ermittelt worden ist, beispielsweise anhand der Fahrbahnkrümmung, die auf die oben beschriebene Weise ermittelt wurde. Bei der Fahrschlauchanpassung geht es dann nur noch um die Anpassung der Breite des Fahrschlauches, und zwar asymmetrisch in dem Sinne, dass die Breitenanpassung für die rechte und die linke Fahrschlauchhälfte unabhängig voneinander erfolgt. Grundsätzlich gilt dabei, dass der Fahrschlauch nach rechts aufgeweitet wird, wenn sich das Fahrzeug auf der äußersten rechten Fahrspur befindet, und nach links, wenn es sich auf der äußersten linken Fahrspur befindet.

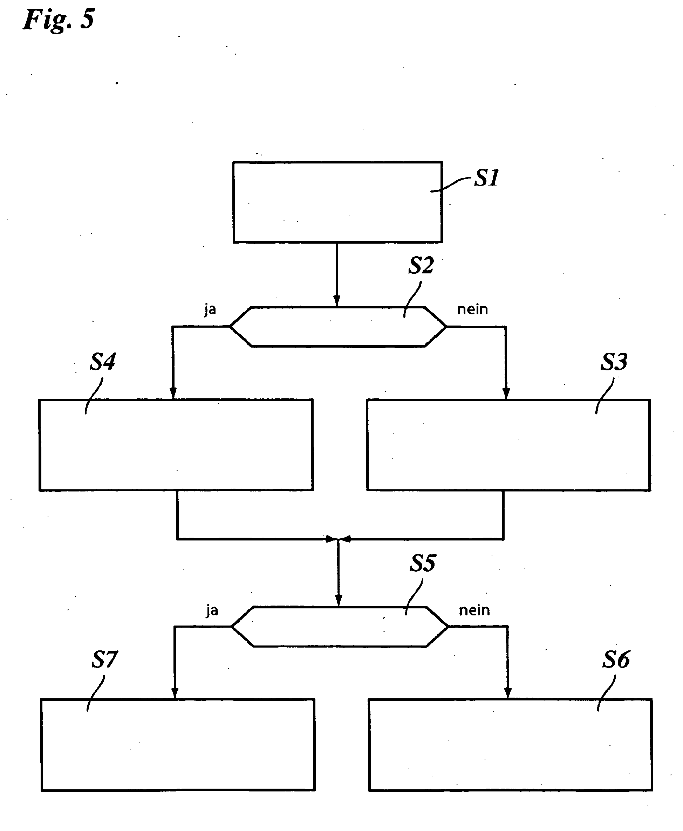

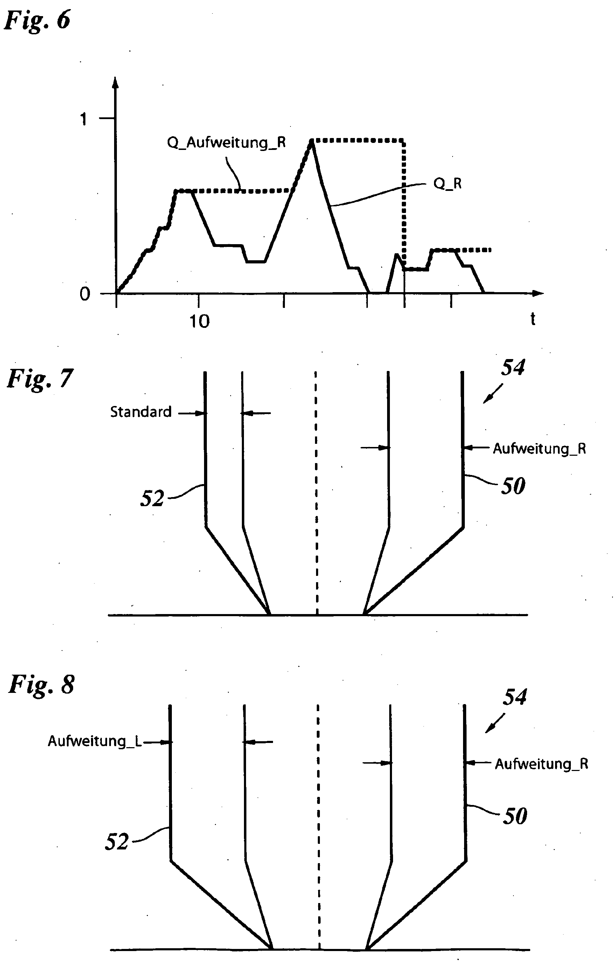

Die Prozedur der Fahrschlauchanpassung bzw. Aufweitung soll nun anhand der Figuren 5 und 6 erläutert werden.

In Schritt S1 in Figur 5 werden zunächst zwei Aufweitungsparameter Q_Aufweitung_L und Q_Aufweitung_R berechnet. Die Abhängigkeit dieser Aufweitungsparameter von Q_R und Q_L ist am Beispiel der rechten Fahrzeugseite in Figur 6 dargestellt. Dort ist die zeitliche Entwicklung des Wahrscheinlichkeitswertes Q_R über einen Zeitraum von etwa 40 s gegen die Zeit t aufgetragen. Der Aufweitungsparameter Q_Aufweitung_R ist durch die Hüllkurve zu dem Graphen von Q_R gegeben. Somit ist der Aufweitungsparameter gleich Q_R solange Q_R zunimmt, und der Aufweitungsparameter bleibt konstant, wenn Q_R abnimmt. So ist sichergestellt, dass die Fahrschlauchaufweitung auch dann erhalten bleibt, wenn der zugehörige Wahrscheinlichkeitswert Q_R mangels auswertbarer Informationen abgeklungen ist.

Nur unter bestimmten Voraussetzungen, nämlich dann, wenn Verkehr in der gleichen Fahrtrichtung mit einer entsprechenden Nebenspurwahrscheinlichkeit erkannt wurde, wird die Nebenspurwahrscheinlichkeit Q_Nebenspur_R mit einem bestimmten Schwellenwert verglichen. Wird dieser Schwellenwert überschritten, so wird das Fahrzeug mit hoher Wahrscheinlichkeit der Nebenspur zugeordnet, und für eine bestimmte Mindestzeit wird ein Reset-Flag gesetzt, das den Aufweitungsparameter wieder auf Q_R zurückführt. Ein solches Reset-Ereignis findet in Figur 6 zur Zeit t = 34 s statt. Wenn innerhalb der erwähnten Mindestzeit kein neues Reset-Ereignis eintritt, wird das Reset-Flag wieder zurückgesetzt, und der Aufweitungsparameter wird wieder durch die Hüllkurve von Q_R bestimmt.

Auch die Reset-Ereignisse sind für die beiden Fahrschlauchhälften unabhängig voneinander definiert. Ein Reset für die rechte Fahrschlauchhälfte findet nur bei gleichsinnigem Verkehr auf der rechten Nebenspur statt, und ein Reset für die linke Fahrschlauchhälfte entsprechend nur bei gleichsinnigem Verkehr auf der linken Nebenspur.

In Figur 5 wird in Schritt S2 geprüft, ob das Reset-Flag Reset_L für die linke Seite gesetzt ist. Wenn dies nicht der Fall ist, wird in Schritt S3 eine Fahrschlauchaufweitung "Aufweitung_L" für die linke Fahrschlauchhälfte berechnet. Diese ist gleich dem Produkt aus dem Aufweitungsparameter Q_Aufweitung__L und einer vorgegebenen Höchstbreite von beispielsweise 1,4 m. Der Fahrschlauch wird somit um so weiter nach links ausgedehnt, je sicherer es ist, dass sich das Fahrzeug auf der äußersten linken Spur befindet. Mindestens entspricht die Fahrschlauchaufweitung jedoch einem vorgegebenen Standardwert von beispielsweise 0,4 m. Die Breite der linken Fahrschlauchhälfte ist dann definiert durch die Hälfte einer Grundbreite von beispielsweise 2,2 m + Aufweitung_L.

Ist in Schritt S2 das Reset-Flag gesetzt, so wird in Schritt S4 die Fahrschlauchaufweitung Aufweitung_L auf 0 gesetzt, d.h., die linke Fahrschlauchhälfte wird auf die Hälfte der Grundbreite reduziert.

In Anschluss an S3 oder Schritt S4 wird dann in Schritt S5 geprüft, ob das Reset-Flag Reset_R für die rechte Seite gesetzt ist. Ist dies nicht der Fall, erfolgt in Schritt S6 die Berechnung der Fahrschlauchaufweitung "Aufweitung R" für die rechte Fahrschlauchhälfte analog zu Schritt S3, und andernfalls wird in Schritt S7 die rechte Fahrschlauchhälfte auf die Hälfte der Grundbreite reduziert.

Die praktische Auswirkung dieser Fahrschlauchanpassung wird nun unter Bezugnahme auf Figuren 7 bis 10 anhand einiger Beispiele erläutert.

In Figur 7 sind die äußeren Grenzen einer rechten Fahrschlauchhälfte 50 und einer linken Fahrschlauchhälfte 52 eines Fahrschlauches 54 fett eingezeichnet, und ein Bereich, der der Grundbreite des Fahrschlauches entspricht, ist in dünnen Linien eingezeichnet. Eine gestrichelte Linie trennt die linke und die rechte Fahrschlauchhälfte. Die in Figur 7 gezeigte Fahrschlauchgeometrie entspricht beispielsweise einer Situation, in der die Fahrspurerkennung einen sehr hohen Wert für Q_R geliefert hat, während für die linke Nebenspur keine Information vorhanden ist. Diese Situation ist typisch für Fahrten auf der äußersten rechten Spur auf einer Autobahn, wenn sich auf der linken Nebenspur keine langsamer fahrenden Fahrzeuge befinden, ebenso für Fahrten auf einer Landstraße ohne Gegenverkehr. Entsprechend dem hohem Wert von Q_R und damit auch einem hohen Wert des Aufweitungsparameters Q_Aufweitung_R ist die rechte Fahrschlauchhälfte 50 maximal aufgeweitet, z.B. um 1,4 m, während für die linke Fahrschlauchhälfte 52 nur die Standard-Aufweitung von 0,4 m gilt. Aufgrund der Aufweitung der rechten Fahrschlauchhälfte können Objekte auf der eigenen Spur, also der äußersten rechten Spur, sicher und frühzeitig erkannt werden, so dass das Annäherungsverhalten des eigenen Fahrzeugs geeignet geregelt werden kann. Die standardmäßige Aufweitung der linken Fahrschlauchhälfte stellt angesichts der mangelnden Information über diese Fahrzeugseite einen Kompromiss zwischen Erkennungssicherheit und der Vermeidung von eventuell doch möglichen Nebenspurstörungen dar.

In Figur 8 sind beide Spurhälften maximal aufgeweitet. Diese Konfiguration ist optimal für Fahrten auf einspurigen Fahrbahnen, beispielsweise bei einspuriger Verkehrsführung auf einer Autobahn oder bei Fahrten auf Landstraßen mit Gegenverkehr. Die maximalen Aufweitungen ergeben sich daraus, dass sowohl Q_R als auch Q_L hohe Werte haben, da die einzige Fahrspur die äußerste rechte und zugleich die äußerste linke Fahrspur ist.

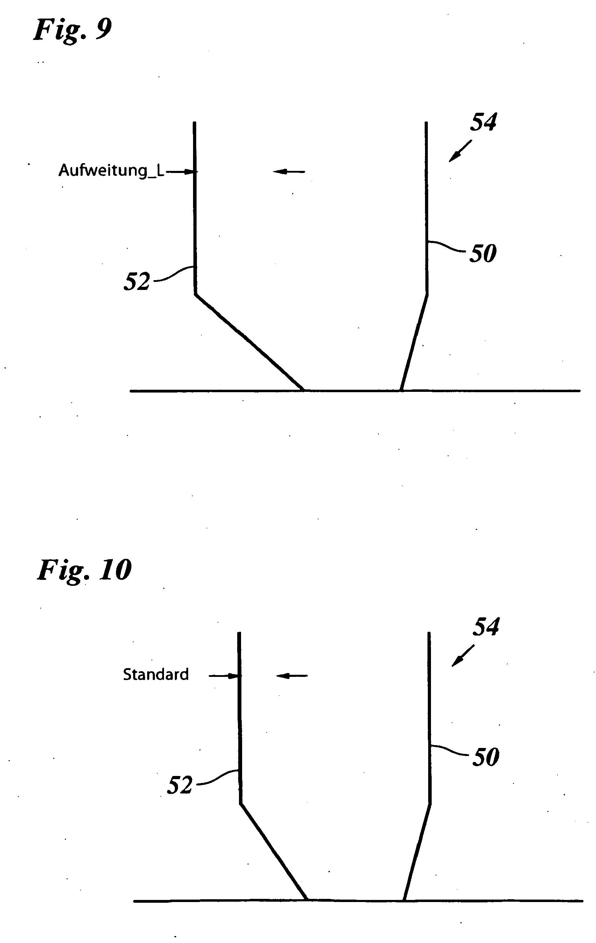

In Figur 9 ist die linke Fahrschlauchhälfte 52 maximal aufgeweitet, während die rechte Fahrschlauchhälfte 50 auf die Grundbreite reduziert ist. Diese Situation ist typisch für einen Überholvorgang auf Landstraßen oder auf der äußersten linken Spur einer Autobahn. Die Reduktion der rechten Fahrschlauchhälfte wurde durch Schritt S7 in Figur 5 bewirkt, im Anschluss an einen Reset in Schritt S5, ausgelöst durch die Erkennung langsamer (überholter) Fahrzeuge auf einer rechten Nebenspur. Wenn nach Ablauf der Reset-Zeit das Flag wieder abfällt, wird die Aufweitung der rechten Fahrschlauchhälfte wieder auf den Standardwert (0,4 m) erhöht, bis ein neuer Reset ausgelöst wird. Wenn, etwa nach einem Spurwechsel nach abgeschlossenem Überholvorgang, sich die Anzeichen dafür mehren, dass die vom eigenen Fahrzeug befahrene Fahrspur die äußerste rechte Fahrspur ist, nimmt die Aufweitung der rechten Fahrschlauchhälfte über den Standardwert hinaus zu.

Die in Figur 10 gezeigte Situation unterscheidet sich von der Situation nach Figur 9 dadurch, dass die linke Fahrschlauchhälfte 52 nur auf den Standardwert aufgeweitet ist. Diese Situation ist typisch für Fahrten auf der mittleren Spur einer Autobahn, während langsamere Fahrzeuge auf der rechten Nebenspur überholt werden und das eigene Fahrzeug gleichzeitig von schnelleren Fahrzeugen auf der linken Nebenspur überholt wird. Die langsameren Fahrzeuge auf der rechten Nebenspur lösen ständig wieder einen Reset aus. Die Fahrzeuge auf der linken Spur lösen dagegen keinen Reset aus, da sie schneller sind als das eigene Fahrzeug. Wohl aber verhindern die Fahrzeuge auf der linken Nebenspur eine Zunahme des Wahrscheinlichkeitswertes Q_L und damit eine Zunahme von Aufweitung_L (Schritt S3 in Figur 5) über den Standardwert. Wenn das eigene Fahrzeug von der äußersten linken Spur (Konfiguration nach Figur 9) auf die mittlere Spur gewechselt hat, bleibt die Konfiguration nach Figur 9 mit maximal aufgeweiteter linker Fahrschlauchhälfte so lange erhalten, bis einmal durch ein langsameres Fahrzeug auf der linken Nebenspur das Reset-Flag_Reset_L gesetzt wird. Dadurch wird analog zu Figur 6 der Aufweitungsparameter Q_ Aufweitung_L auf Q_L zurückgesetzt, und es ergibt sich dann die Konfiguration nach Figur 10.

**Patentansprüche**

1. Verfahren zur Objektplausibilisierung in Fahrerassistenzsystemen (10) von Kraftfahrzeugen, die ein Ortungssystem (12) zur Ortung von Objekten im Umfeld des Fahrzeugs und zur Messung von Querablagen (Y, Y_H) dieser Objekte in der Richtung senkrecht zur Fahrtrichtung aufweisen, bei dem ein Fahrschlauch (54) für das eigene Fahrzeug definiert wird und bewegliche Objekte danach plausibilisiert werden, ob sie sich innerhalb oder außerhalb des Fahrschlauches befinden, **gekennzeichnet durch** die folgenden Schritte:

    - statistische Auswertung der Querablagen (Y) von ruhenden Objekten, zur Erkennung linker und rechter Fahrbahngrenzen,
    - Auswertung der Querablagen (Y_H) von beweglichen Objekten, zur Erkennung etwaiger Nebenspuren,
    - berechnen eines Wahrscheinlichkeitswertes Q_R dafür, dass sich das eigene Fahrzeug auf der äußersten rechten Fahrspur der Fahrbahn befindet, und eines Wahrscheinlichkeitswertes Q_L dafür, dass sich das eigene Fahrzeug auf der äußersten linken Fahrspur befindet, und
    - variieren der Breite und/oder Querposition des Fahrschlauches (54) in Abhängigkeit von den Wahrscheinlichkeitswerten Q_R und Q_L.

2. Verfahren nach Anspruch 1, **dadurch gekennzeichnet, dass** die Breite einer rechten Hälfte (50) des Fahrschlauches (54) in Abhängigkeit von dem Wahrscheinlichkeitswert Q_R und, unabhängig davon, die Breite einer linken Hälfte (52) des Fahrschlauches in Abhängigkeit von Q_L variiert wird.

3. Verfahren nach Anspruch 1 oder 2, **dadurch gekennzeichnet, dass** durch die statistische Auswertung der Querablagen (Y) von ruhenden Objekten Wahrscheinlichkeitswerte Q_Rand_R und Q_Rand_L gebildet werden, die die Wahrscheinlichkeit dafür angeben, dass sich das eigene Fahrzeug in der Nähe der rechten bzw. linken Fahrbahngrenze befindet, und die wahrscheinlichkeitserhöhend in die Wahrscheinlichkeitswerte Q_R und Q_L einfließen.

4. Verfahren nach Anspruch 3, **dadurch gekennzeichnet, dass** statistische Güteparameter QS_R und QS_L, die die Qualität der Erkennung der linken und rechten Fahrbahngrenzen kennzeichnen, wahrschinlichkeitserhöhend in die Wahrscheinlichkeitswerte Q_Rand_R und Q_Rand_L einfließen.

5. Verfahren nach Anspruch 3 oder 4, **dadurch gekennzeichnet, dass** die Wahrscheinlichkeitswerte Q_Rand_R und Q_Rand_L anhand eines vorgegebenen Fahrbahnrandprofils (34) in Abhängigkeit von Werten Y_Rand_R und Y_Rand_L für die Querablage der linken und rechten Fahrbahngrenzen bestimmt werden.

6. Verfahren nach einem der Ansprüche 3 bis 5, **dadurch gekennzeichnet, dass** die Wahrscheinlichkeitswerte Q_Rand_R und Q__Rand__L einer Tiefpassfilterung unterzogen werden, bevor sie in die Wahrscheinlichkeitswerte Q_R und Q_L einfließen.

7. Verfahren nach einem der vorstehenden Ansprüche, **dadurch gekennzeichnet, dass** Nebenspurwahrscheinlichkeiten Q Nebenspur__R und Q_Nebenspur_L, die die Wahrscheinlichkeit dafür angeben, dass sich rechts bzw. links neben dem Fahrzeug eine Nebenspur befindet, anhand eines vorgegebenen Fahrspurprofils (42) in Abhängigkeit von den Querablagen Y_H der beweglichen Objekte bestimmt werden.

8. Verfahren nach Anspruch 7, **dadurch gekennzeichnet, dass** gefilterte Wahrscheinlichkeitswerte Qf__Parallelspur__R und Qf__Parallelspur__L gebildet werden, indem die Nebenspurwahrscheinlichkeiten Q___Nebenspur_R und Q Nebenspur_L jeweils für jedes geortete Objekt, das sich in der gleichen Richtung wie das eigene Fahrzeug bewegt, einem Tiefpass-Filterzyklus unterworfen werden, und dass die gefilterten Wahrscheinlichkeitswerte Qf_Parallelspur_R und Qf_Parallelspur_L wahrscheinlichkeitssenkend in den entsprechenden Wahrscheinlichkeitswert Q__R bzw. Q__L einfließen.

9. Verfahren nach Anspruch 8, **dadurch gekennzeichnet, dass** mindestens ein gefilterter Wahrscheinlichkeitswert Qf Gegenspur__L gebildet wird, indem die Nebenspurwahrscheinlichkeit Q_Nebenspur_L jeweils für jedes geortete Objekt, das sich in Gegenrichtung zum eigenen Fahrzeug bewegt, einem Tiefpass-Filterzyklus unterworfen wird, und dass der gefilterte Wahrscheinlichkeitswert Qf_Gegenspur_L wahrscheinlichkeitserhöhend in den entsprechenden Wahrscheinlichkeitswert Q_L einfließt.

10. Verfahren nach einem der vorstehenden Ansprüche, **dadurch gekennzeichnet, dass** mindestens ein Aufweitungsparameter (Q_Aufweitung_R, Q_Aufweitung_L) gebildet wird, der mit den Wahrscheinlichkeitswerten Q_R und Q_L wächst, solange diese zunehmen, und konstant bleibt, wenn diese Wahrscheinlichkeitswerte abnehmen, und der durch einen Reset auf Q_R bzw. Q_L zurückgesetzt wird, wenn auf der betreffenden Fahrbahnseite ein Objekt geortet wird, dessen Nebenspurwahrscheinlichkeit (Q_Nebenspur_R, Q_Nebenspur_L) oberhalb eines bestimmten Schwellenwertes liegt und das sich langsamer oder allenfalls geringfügig schneller als das eigene Fahrzeug in der gleichen Richtung wie dieses bewegt.

11. Verfahren nach Anspruch 10, **dadurch gekennzeichnet, dass** die Fahrschlauchbreite zwischen einem Standardwert und einem Maximalwert variiert wird, solange kein Reset vorliegt, und bei einem Reset für eine bestimmte Zeit auf eine Grundbreite reduziert wird, die kleiner ist als die Standardbreite.

12. Fahrerassistenzsystem, welches das Verfahren nach einem der vorstehenden Ansprüche durchführt.

**Claims**

1. Method for checking the possibility of objects in driver assistance systems (10) of motor vehicles which have a locating system (12) for locating objects in the surroundings of the vehicle and for measuring transverse positioning (Y, Y_H) of these objects in the direction perpendicular to the direction of travel, in which method a driving tube (54) for the driver's own vehicle is defined and plausibility checking is then carried out on moveable objects to determine whether they are located within or outside the driving tube, **characterized by** the following steps:

   - statistical evaluation of the transverse positioning (Y) of stationary objects in order to detect left-hand and right-hand boundaries of the carriageway,
   - evaluation of the transverse positioning (Y_H) of moveable objects in order to detect any adjacent lanes,
   - calculation of a probability value Q_R for whether the driver's own vehicle is located on the outermost right-hand lane of the carriageway, and of a probability value Q_L for whether the driver's own vehicle is located on the outermost left-hand lane, and
   - varying of the width and/or transverse position of the driving tube (54) as a function of the probability values Q_R and Q_L.

2. Method according to Claim 1, **characterized in that** the width of a right-hand half (50) of the driving tube (54) is varied as a function of the probability value Q_R and, independently thereof, the width of a left-hand half (52) of the driving tube is varied as a function of Q_L.

3. Method according to Claim 1 or 2, **characterized in that**, by means of the statistical evaluation of the transverse positioning (Y) of stationary objects, probability values Q_edge_R and Q_edge_L are formed which specify the probability of the driver's own vehicle being located in the vicinity of the right-hand or left-hand boundary of the carriageway, and which probability values Q_edge_R and Q_edge_L are included in a way which increases the probability, in the probability values Q_R and Q_L.

4. Method according to Claim 3, **characterized in that** statistical quality parameters QS_R and QS_L, which characterize the quality of the detection of the left-hand and right-hand boundaries of the carriageway, are included, in a way which increases the probability, in the probability values Q_edge_R and Q_edge_L.

5. Method according to Claim 3 or 4, **characterized in that** the probability values Q_edge_R and Q_edge_L are determined on the basis of a predefined carriageway edge profile (34) as a function of values Y_edge_R and Y_edge_L for the transverse positioning of the left-hand and right-hand boundaries of the carriageway.

6. Method according to one of Claims 3 to 5, **characterized in that** the probability values Q_edge_R and Q_edge_L are subjected to low-pass filtering before they are included in the probability values Q_R and Q_L.

7. Method according to one of the preceding claims, **characterized in that** adjacent lane probabilities Q adjacentlane_R and Q_adjacentlane_L, which specify the probability of an adjacent lane being located to the right or left next to the vehicle, are determined on the basis of a predefined lane profile (42) as a function of the transverse positioning Y_H of the moveable objects.

8. Method according to Claim 7, **characterized in that** filtered probability values Qf_parallellane_R and Qf_parallellane_L are formed **in that** the adjacent lane probabilities Q_adjacentlane_R and Q_adjacentlane_L are each subjected to a low-pass filtering cycle for each located object which is moving in the same direction as the driver's own vehicle, and **in that** the filtered probability values Qf_parallellane_R and Qf_parallellane_L are included, in a way which reduces the probability, in the corresponding probability value Q_R and Q_L, respectively.

9. Method according to Claim 8, **characterized in that** at least one filtered probability value Qf_oncominglane_L is formed **in that** the adjacent lane probability Q_adjacentlane_L for each located object which is moving in the opposite direction with respect to the driver's own vehicle is subjected in each case to a low-pass filtering cycle, and **in that** the filtered probability value Qf_oncominglane_L is included, in a way which increases the probability, in the corresponding probability value Q_L.

10. Method according to one of the preceding claims, **characterized in that** at least one expansion parameter (Q_expansion_R, Q_expansion_L) is formed which increases with the probability values Q_R and Q_L as long as they are increasing, and remains constant if these probability values decrease, and which is reset by a reset to Q_R and Q_L, respectively, if an object whose adjacent lane probability (Q_adjacentlane_R, Q_adjacentlane_L) is above a specific threshold value and which is moving more slowly or at most slightly faster than the driver's own vehicle in the same direction as said vehicle is located on the respective side of the carriageway.

11. Method according to Claim 10, **characterized in that** the width of the driving tube is varied between a standard value and a maximum value as long as a reset does not occur, and in the case of a reset it is reduced for a specific time to a basic width which is less than the standard width.

12. Driver assistance system which implements the method according to one of the preceding claims.

**Revendications**

1. Procédé de détermination de la plausibilité d'un objet dans les systèmes d'assistance au conducteur (10) de véhicules automobiles, lesquels présentent un système de localisation (12) pour localiser des objets dans l'environnement du véhicule et pour mesurer des écarts transversaux (Y, Y_H) de ces objets dans la direction perpendiculaire au sens de déplacement, avec lequel un boyau de déplacement (54) pour le véhicule propre est défini et la plausibilité des objets mobiles est déterminée pour vérifier s'ils se trouvent à l'intérieur ou à l'extérieur du boyau de déplacement, **caractérisé par** les étapes suivantes :

  - analyse statistique des écarts transversaux (Y) des objets au repos en vue de reconnaître les limites gauche et droite de la chaussée,
  - analyse des écarts transversaux (Y_H) des objets mobiles en vue de reconnaître les éventuelles voies voisines,
  - calcul d'un indice de probabilité Q_R pour que le véhicule propre se trouve sur la voie de circulation la plus à droite de la chaussée et d'un indice de probabilité Q_L pour que le véhicule propre se trouve sur la voie de circulation la plus à gauche de la chaussée et
  - modification de la largeur et/ou de la position transversale du boyau de déplacement (54) en fonction des indices de probabilité Q_R et Q_L.

2. Procédé selon la revendication 1, **caractérisé en ce que** la largeur de la moitié droite (50) du boyau de déplacement (54) est modifiée en fonction de l'indice de probabilité Q_R et, indépendamment de cela, la largeur de la moitié gauche (52) du boyau de déplacement est modifiée en fonction de l'indice de probabilité Q_L.

3. Procédé selon la revendication 1 ou 2, **caractérisé en ce que** des indices de probabilité Q_Bord_R et Q_Bord_L sont obtenus par l'analyse statistique des écarts transversaux (Y) des objets au repos, lesquels indiquent la probabilité pour que le véhicule propre se trouve à proximité de la limite droite ou gauche de la chaussée et interviennent dans les indices de probabilité Q_R et Q_L en augmentant la probabilité.

4. Procédé selon la revendication 3, **caractérisé en ce que** des paramètres de qualité statistiques QS_R et QS_L, lesquels identifient la qualité de la reconnaissance des limites gauche et droite de la chaussée, interviennent dans les indices de probabilité Q_Bord_R et Q_Bord_L en augmentant la probabilité.

5. Procédé selon la revendication 3 ou 4, **caractérisé en ce que** les indices de probabilité Q_Bord_R et Q_Bord_L sont déterminés au moyen d'un profil de bord de chaussée prédéfini (34) en fonction des valeurs Y_Bord_R et Y_Bord_L de l'écart transversal des limites gauche et droite de la chaussée.

**6.** Procédé selon l'une des revendications 3 à 5, **caractérisé en ce que** les indices de probabilité Q_Bord_R et Q_Bord_L sont soumis à un filtrage passe-bas avant qu'ils interviennent dans les indices de probabilité Q_R et Q_L.

**7.** Procédé selon l'une des revendications précédentes, **caractérisé en ce que** des indices de probabilité de voie voisine Q_Voie_voisine_R et Q_Voie_voisine_L, lesquels indiquent la probabilité pour qu'une voie voisine se trouve à droite ou à gauche à côté du véhicule, sont déterminés au moyen d'un profil de voie de circulation (42) prédéfini en fonction des écarts transversaux Y_H des objets mobiles.

**8.** Procédé selon la revendication 7, **caractérisé en ce que** des indices de probabilité filtrés Qf_Voie_parallèle_R et Qf_Voie_parallèle_L sont formés en soumettant les indices de probabilité de voie voisine Q_Voie_voisine_R et Q_Voie_voisine_L respectifs de chaque objet localisé qui se déplace dans la même direction que le véhicule propre à un cycle de filtrage passe-bas et que les indices de probabilité filtrés Qf_Voie_parallèle_R et Qf_Voie_parallèle_L interviennent dans les indices de probabilité Q_R et Q_L en réduisant la probabilité.

**9.** Procédé selon la revendication 8, **caractérisé en ce qu'**au moins un indice de probabilité filtré Qf_Voie_opposée_L est formé en soumettant l'indice de probabilité de voie voisine Q__Voie_voisine_L à chaque fois pour chaque objet localisé qui se déplace dans la direction opposée à celle du véhicule propre à un cycle de filtrage passe-bas et que l'indice de probabilité filtré Qf_Voie_opposée_L intervient dans l'indice de probabilité Q_L correspondant en augmentant la probabilité.

**10.** Procédé selon l'une des revendications précédentes, **caractérisé en ce qu'**au moins un indice d'élargissement (Q_élargissement_R, Q_élargissement_L) est formé, lequel croît avec les indices de probabilité Q_R et Q_L tant que ceux-ci augmentent et reste constant lorsque ces indices de probabilité diminuent, et lequel est ramené à la valeur de Q_R ou Q_L par une réinitialisation lorsque sur le côté concerné de la chaussée est localisé un objet dont la probabilité de voie voisine (Q_Voie_voisine_R, Q_Voie_voisine_L) est supérieure à une valeur de seuil donnée et qui se déplace plus lentement ou tout au plus légèrement plus rapidement que le véhicule propre dans la même direction que celui-ci.

**11.** Procédé selon la revendication 10, **caractérisé en ce que** la largeur du boyau de déplacement varie entre une valeur standard et une valeur maximale tant qu'il n'existe pas de réinitialisation et, en cas de réinitialisation, est réduite pendant un certain temps à une largeur de base qui est inférieure à la largeur standard.

**12.** Système d'assistance au conducteur qui met en oeuvre le procédé selon l'une des revendications précédentes.

*Fig. 1*

*Fig. 2*

*Fig. 3*

*Fig. 4*

*Fig. 5*

**Fig. 6**

Q_Aufweitung_R

Q_R

1

0

10

t

**Fig. 7**

Standard

54

Aufweitung_R

52

50

**Fig. 8**

Aufweitung_L

54

Aufweitung_R

52

50

*Fig. 9*

Aufweitung_L

*54*

*50*

*52*

*Fig. 10*

Standard

*54*

*50*

*52*

**EP 1 853 453 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10118265